(19) Europäisches Patentamt
European Patent Office
Office européen des brevets

(11) Veröffentlichungsnummer: **0 402 726 A1**

(12) # EUROPÄISCHE PATENTANMELDUNG

(21) Anmeldenummer: **90110542.9**

(51) Int. Cl.5: **C09J 175/12, C09J 171/10, C08G 18/50**

(22) Anmeldetag: **02.06.90**

(30) Priorität: **16.06.89 DE 3919696**

(43) Veröffentlichungstag der Anmeldung: **19.12.90 Patentblatt 90/51**

(84) Benannte Vertragsstaaten: **AT BE CH DE ES FR GB IT LI NL SE**

(71) Anmelder: **BAYER AG**

**D-5090 Leverkusen 1 Bayerwerk(DE)**

(72) Erfinder: **Hess, Heinrich, Dr.**
**Auf der Schildwache 13a**
**D-5000 Köln 80(DE)**
Erfinder: **Kopp, Richard, Dr.**
**Bilharzstrasse 15**
**D-5000 Köln 80(DE)**
Erfinder: **Grögler, Gerhard, Dr.**
**von-Diergardt-Strasse 48**
**D-5090 Leverkusen(DE)**
Erfinder: **Stepanski, Horst, Dr.**
**Raushofstrasse 20**
**D-5090 Leverkusen 3(DE)**
Erfinder: **Hombach, Rudolf, Dr.**
**Johann-Janssen-Strasse 24**
**D-5090 Leverkusen 1(DE)**
Erfinder: **Schäfer, Walter, Dr.**
**In den Weiden 25**
**D-5653 Leichlingen(DE)**

(54) **Reaktivklebstoffe auf Polyurethanbasis.**

(57) Verbesserte Polyurethanklebstoffmassen enthalten wenigstens ein Polyisocyanat, wenigstens ein Polyol und mindestens ein Polyetheramin.

EP 0 402 726 A1

## Reaktivklebstoffe auf Polyurethanbasis

Die Erfindung betrifft Reaktivklebstoffe auf Polyurethanbasis und ihre Verwendung als Eintopfklebstoffsysteme.

Heißhärtbare Einkomponenten-Reaktivklebstoffe auf der Basis von durch Polyaddukt-Umhüllung stabilisierten, festen, feinverteilten Polyisocyanaten und mit Isocyanaten reaktionsfähigen Verbindungen wie Polyolen und Polyaminen sind in der Patentliteratur hinreichend bekannt (siehe z.B. EP-A-62 780, 100 508 und 153 579 und DE-A-31 12 054, 32 28 723 und 34 03 499).

Ein Problem bei der Formulierung heißhärtbarer Einkomponenten-Polyurethan-Klebstoffe nach dem Umhüllungsprinzip bestand bisher darin, daß diese gleichzeitig möglichst hohe Härte und gute Temperaturbeständigkeit bei möglichst geringem Isocyanatbedarf aufweisen sollen.

Der Erfindung liegt die Aufgabe zu Grunde, verbesserte Klebstoffsysteme auf Polyurethanbasis bereitzustellen, die für Einkomponentenklebstoffe geeignet sind.

Gegenstand der Erfindung sind Reaktivklebstoffe auf Polyurethanbasis, enthaltend im wesentlichen jeweils wenigstens ein Polyisocyanat A, ein Polyol B und wenigstens ein Polyamin C, sowie gegebenenfalls übliche Zusatzstoffe, dadurch gekennzeichnet, daß das Polyamin C ein Polyetheramin mit wenigstens zwei Aminogruppen, wenigstens einem Phenylrest und wiederkehrenden Polyoxyalkyleneinheiten ist.

In einer bevorzugten Ausführungsform entspricht der Phenylrest im Polyetheramin C dem Rest der nach Abzug von zwei phenolischen Hydroxylgruppen aus folgenden Verbindungen erhalten wird: Hydrochinon, 4,4′-Dihydroxydiphenyl, 4,4′-Dihydroxydiphenylmethan, 2,2-Bis-(4-hydroxyphenyl)-propan, 1,1-Bis-(4-hydroxyphenyl)-ethan, 1,1-Bis-(4-hydroxyphenyl)-cyclopentan, 1,1-Bis-(4-hydroxyphenyl)-cyclohexan, 1,1-Bis-(4-hydroxyphenyl)-cyclohexan, 1,1-Bis-(4-hydroxyphenyl)-3,3,5-trimethylcyclohexan, 4,4′-Dihydroxystilben, 4,4′-Dihydroxytolan, 4,4′-Dihydroxydiphenylether, 3,3′-Dihydroxydiphenylether, 1,4-Dihydroxynaphthalin, 1,5-Dihydroxynaphthalin, 1,6-Dihydroxynaphthalin, 1,7-Dihydroxynaphthalin, 2,6-Dihydroxynaphthalin, 2,7-Dihydroxynaphthalin, 1,4-Bis-(2-hydroxyethoxy)-benzol, 1,5-Bis-(2-hydroxyethoxy)naphthalin und 2,2-Bis-[4-(2-hydroxyethoxy)-phenyl]propan.

In einer besonders bevorzugten Ausführungsform entspricht das Polyetheramin folgender allgemeiner Formel

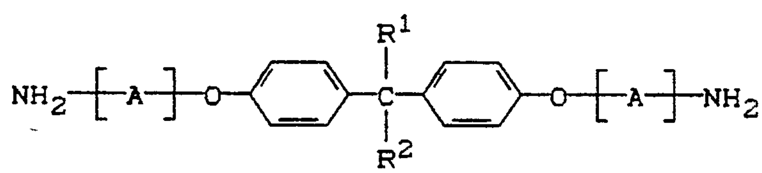

worin bedeuten

A mit O-Atomen unterbrochene, gegebenenfalls substituierte Kette aus gegebenenfalls unterschiedlichen Alkylenen **A1**

$R^1$, $R^2$: Alkylrest mit 1 bis 6 C-Atomen, insbesondere Methyl oder zusammen mit dem sie verbindenden C-Atomen der Rest zur Vervollständigung eines carbocyclischen Ringes, insbesondere mit 5-7 C-Atomen

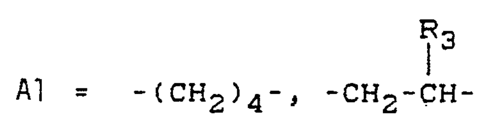

$R^3$ : Wasserstoff und/oder (Cyclo)-Alkylgruppen mit 1-6 Kohlenstofatomen.

Ganz besonders bevorzugte Polyamine entsprechen folgender Formel

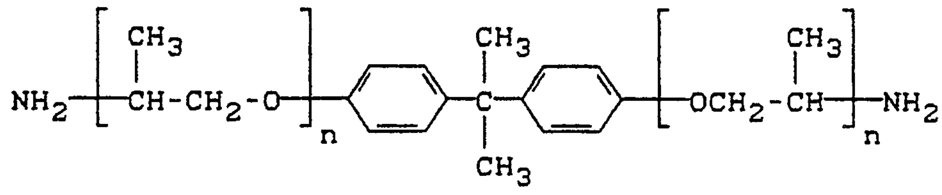

mit n = 1-50, insbesondere 3-15.

Bevorzugte Polyamine C haben ein Molekulargewicht von 400 bis 6.000, insbesondere von 600 bis 3.000.

Bevorzugte Polyisocyanate A haben einen Schmelzpunkt über 40° C, vorzugsweise über 80° C, z.B. 1,5-Naphthalindiisocyanat, dimeres 4,4′-Diisocyanatodiphenylmethan, dimeres 2,4-Diisocyanatotoluol, 3,3′-Diisocyanato-4,4′-dimethyl-N,N′-diphenylharnstoff und N,N′-Bis-[4-(4- oder 2-isocyanatophenylmethyl)-phenyl]-harnstoff. Besonders bevorzugt ist dimeres 2,4-Diisocyanatotoluol.

Die Polyisocyanate werden vorzugsweise durch Einwirkung von beispielsweise aliphatischen Polyaminen Molekulargewichten von 32 bis 399 und gegebenenfalls durch Einwirkung von aliphatischen Polyaminen mit Molekulargewichten von 400 bis 8000 stabilisiert. Als Beispiele für derartige Polyamine seien genannt: Ethylendiamin, 1-Amino-3,3,5-trimethyl-5-aminomethyl-cyclohexan, 3,3′-Dimethyl-4,4′-diaminodicyclohexylmethan, Diethylentriamin, Methylnonandiamin.

Als Stabilisatoren kommen z.B. ferner in Frage: Hydrazin, zumeist in Form von Hydrazinhydrat, $C_1$-$C_6$-alkylsubstituierte Hydrazine, z.B. Methylhydrazin, Ethylhydrazin, Hydroxyethyl-hydrazin oder N,N′-Dimethylhydrazin, Verbindungen mit Hydrazid-Endgruppen wie z.B. Carbodihydrazid, Ethylen-bis-carbazinester, β-Semicarbazido-propionsäurehydrazid oder Isophoron-bis-semicarbazid. Weitere Desaktivierungsmittel sind in DE-A-3 230 757 und 3 112 054 sowie EP-A-103 325 und 62 780 aufgezählt.

Als Stabilisatoren für die Isocyanatkomponente können auch offenkettige, mono- oder bicyclische Amidine bzw. Guanidine, welche keine gegenüber Isocyanaten reaktiven Wasserstoffatome aufweisen, verwendet werden. Als Beispiele für derartige Verbindungen seien genannt: Tetramethylguanidin, Pentamethylguanidin, 1,2-Dimethyl-tetrahydropyrimidin, 1,8-Diaza-bicyclo[5,4,0]-undec-7-en, 1,5-Diaza-bicyclo[4,3,0]-non-5-en. Weitere Beispiele für derartige Amidine sind in der DE-A-3 403 500 aufgeführt.

Als NCO-reaktives Suspendiermittel für die festen, stabilisierten Polyisocyanate werden z.B. flüssige nieder-und/oder höhermolekulare Polyole und/oder Polyamine verwendet.

Als bevorzugte Polyole B vom Molekulargewicht 400 bis 10000 können die mindestens zwei, vorzugsweise 2 bis 4, Hydroxylgruppen und in der Regel ein Molekulargewicht von 400-8000 aufweisenden Polyester, Polyether, Polythioether, Polyacetale, Polycarbonate und Polyesteramide, wie sie für die Herstellung von homogenen und von zellförmigen Polyurethanen an sich bekannt sind, verwendet werden. Beispiele hierfür sind z.B. ausführlich in der DE-OS 2 920 501, DE-Ds 2 854 384 und der DE-OS 3 230 757 aufgeführt.

Auch bereits Urethan- oder Harnstoffgruppen enthaltende Polyhydroxylverbindungen sowie gegebenenfalls modifi zierte, natürliche Polyole, wie Rizinusöl, Kohlenhydrate oder Stärke, sind verwendbar. Auch Anlagerungsprodukte von Alkylenoxiden an Phenol-Formaldehyd-Harze bzw. an Harnstoff-Formaldehydharze können im erfindungsgemäßen Verfahren eingesetzt werden.

Es können gegebenenfalls auch Polyhydroxylverbindungen eingesetzt werden, in welchen hochmolekulare Polyaddukte bzw. Polykondensate oder Polymerisate in feindisperser oder auch gelöster Form enthalten sind.

Polyadduktha1tige Polyhydroxylverbindungen werden erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in o.g., Hydroxylgruppen aufweisenden Verbindungen, ablaufen laßt.

Auch durch Vinylpolymerisate modifizierte Polyhydroxylverbindungen, wie sie z.B. durch Polymerisation von Styrol und Acrylnitril in Gegenwart von Polyethern oder Polycarbonatpolyolen erhalten werden, sind für das erfindungsgemäße Verfahren geeignet.

Vertreter dieser erfindungsgemäß zu verwendenden Verbindungen sind z.B. in High Polymers, Vol XVI, "Poly urethanes, Chemistry and Technology", verfaßt von Saunders-Frisch, Interscience Publishers, New York, London, Band I, 1962, Seiten 32-42 und Seiten 44 und 54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45 bis 71, und in der DE-OS 2 854 384 und 2 920 501 beschrieben.

Geeignete Polyole B sind auch hydroxylgruppenhaltige Polymerisate, beispielsweise Copolymerisate

aus olefinisch ungesättigten Monomeren und olefinisch ungesättigten Monomeren mit aktivem Wasserstoff. Sie werden beispielsweise in der EP-A 62 780, Seite 5 und deren Beispielen beschrieben. Sie finden vorzugsweise Anwendung für Dichtungs-, Füll-, Kleb- oder Unterbodenschutzmassen.

Selbstverständlich können Mischungen der obengenannten Verbindungen mit mindestens zwei gegenüber Isocyanaten reaktionsfähigen Wasserstoffatomen, z.B. Mischungen von Polyethern und Polyestern, eingesetzt werden.

Als in den Suspensionen gegebenenfalls enthaltene zusätzliche Polyole kommen auch niedermolekulare Kettenverlängerer oder Vernetzer in Frage. Bei diesen Kettenverlängerern oder Vernetzern handelt es sich insbesondere um mindestens zweifunktionelle Verbindungen, welche an aliphatische und/oder cycloaliphatische Gruppen gebundene Hydroxylgruppen und Molekulargewichte zwischen 62 und 399 aufweisen Bevorzugt sind dabei niedermolekulare Diole und Triole mit an aliphatische oder cycloaliphatische Gruppen gebundenen Hydroxylgruppen des Molekulargewichtsbereichs 62 bis 399.

Diese Verbindungen weisen in der Regel 2 bis 8, vorzugsweise 2 bis 4, besonders bevorzugt jedoch 2, Hydroxylgruppen auf. Es können selbstverständlich auch Mischungen von verschiedenen Verbindungen verwendet werden. Als Beispiele für derartige Verbindungen seien genannt: Ethylenglykol, Diethylenglykol, Triethylenglykol, Tetraethylenglykol, Trimethylenglykol, Butandiol-2,3 und/oder -1,4, Pentandiol-1,5, Hexandiol-1,6, Neopentylglykol, 1,4-Bis-hydroxyethyl-cyclohexan, 1,4-Dihydroxycyclohexan, Terephthalsäure-bis(5-hydroxyethyl)ester, 1,4,3,6-Dianhydrohexite, 1,4-Monoanhydrotetrite, Propylenglykol, Dipropylenglykol, Tripropylenglykol, Tetrapropylenglykol, Bis-2-hydroxyethyl-hydrochinon, Bis-(2-hydroxyethyl)-resorcin. Als mehrwertige Verbindungen seien genannt: Trimethylolpropan, Trimethylolethan, Hexantriol-1,2,6, Glycerin, Pentaerythrit, Chinit, Mannit, Sorbit, Rizinusöl sowie Formose oder Formit.

Ferner sind geeignet tertiäraminhaltige Di- oder Polyole, z.B. N-Methyldiethanolamin, Tristhanolamin oder N,N′-Bis-hydroxyethylpiperazin.

Es sind auch Diole mit zusätzlichen Gruppen einsetzbar, z.B. Adipinsäure-bis-(2-hydroxyethyl)-ester, Terephthal säure-bis-(2-hydroxyethyl)-ester, Diol-urethane, Diolharnstoffe oder Polyole, welche Sulfonat- und/oder Phosphonatgruppen enthalten, z.B. 1,6-Hexamethylen-bis-(2-hydroxyethylurethan), 4,4′-Diphenylmethan-bis(2-hydroxyethylharnstoff) oder das Addukt von Na-Bisulfit an Butandiol-1,4, bzw. dessen Alkoxylierungsprodukte. Weitere niedermolekulare Verbindungen werden ausführlich in der DE-A 2 854 384 beschrieben.

Die obengenannten nieder- und höhermolekularen Polyole können gegebenenfalls durch Vorreaktion mit einem Unterschuß Polyisocyanat modifiziert sein.

Als Polyisocyanate kommen hierfür aliphatische, cycloaliphatische, araliphatische, aromatische und/oder heterocyclische Polyisocyanate in Betracht, wie sie z.B. in der DE-OS 2 920 501 (S. 12 bis 16) aufgeführt sind.

Besonders bevorzugt werden in der Regel die technisch leicht zugänglichen Polyisocyanate, z. B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI"), 4,4′- und/oder 2,4′-Diphenylmethan-diisocyanat, 1,6-Hexamethylendiisocyanat, 1-Isocyanato-3,3,5-trimethyl-5-isocyanatomethyl-cyclohexan, Perhydro-2,4′-und/oder 4,4′-diphenylmethan-diisocyanat.

Die Herstellung der erfindungsgemäß zu verwendenden Polyetheramine C erfolgt beispielsweise durch die redukti ve Aminierung von mit Hydroxylgruppen terminierten Polyethern wie es in US-A-3 654 370 oder EP-A-0 017 651 beschrieben ist.

Ausgangsverbindungen für derartige hydroxylterminierte Polyether sind cyclische Oxide, deren Polymerisation auf einer Hydroxyl-, primäre oder sekundäre Amino-, Amid-oder Carboxylgruppen enthaltenden Verbindung gestartet wird.

Einzusetzende cyclische Oxide sind z.B. Ethylenoxid, Propylenoxid und Tetrahydrofuran.

Zusätzlich können übliche weitere flüssige, nieder-und/oder höhermolekulare, aromatische und/oder aliphatische Polyamine, insbesondere mit einem Molekulargewicht von 700 bis 4500, verwendet werden. Bevorzugt werden höhermolekulare aliphatische Polyamine, gegebenenfalls mit untergeordneten Mengen niedermolekularer aliphatischer Polyamine.

Zusätzlich können niedermolekulare Kettenverlängerer D verwendet werden, insbesondere niedermolare aromatische Diamine des Molekulargewichtsbereiches 108 bis 399, die die Aminogruppen auch an heterocyclischen Resten mit aromatischem Charakter gebunden, enthalten können.

Gegebenenfalls können die üblichen Polyurethankatalysatoren, mit besonders gutem Effekt tertiäre Amine oder Metallkatalysatoren, verwendet werden.

Es sind dies z.B. tertiäre Amine, wie Triethylamin, Tributylamin, N,N,N′,N′-Tetramethyl-ethylendiamin, 1,4-Diaza-bicyclo-(2,2,2)-octan, N,N-Dimethylbenzylamin, N,N-Dimethylcyclohexylamin.

Als organische Metallverbindungen kommen insbesondere organische Zinnverbindungen und Bleiverbindungen als Katalysatoren in Frage. Als organische Zinnverbindungen kommen vorzugsweise Zinn(II)-salze von Carbonsäuren wie Zinn(II)-ethylhexoat und Zinn(II)-stearat und die Dialkylzinnsalze von Carbonsäuren, wie z.B. Dibutylzinndilaurat oder Dioctylzinndiacetat in Betracht. Als organische Bleiverbindungen kommen vorzugsweise Blei(II)-salze von Carbonsäuren wie Blei(II)-naphthenat, Blei(II)-ethylhexoat, Blei(II)-stearat, aber auch z.B. Blei(II)-bis-diethyldithiocarbamat in Betracht.

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102, und in der DE-A 3 230 757 beschrieben.

Die Katalysatoren werden in der Regel in einer Menge zwischen etwa 0,001 und 10 Gew.-%, bezogen auf die Gesamtzusammensetzung, eingesetzt.

Als gegebenenfalls enthaltene Hilfs- und Zusatzstoffe seien genannt: Farbstoffe oder Pigmente, Füllstoffe wie Schwerspat, Kreide, Quarzmehl, Kieselgur, Silicagel, Fällungskieselsäuren, pyrogene Kieselsäuren, Gips, Talkum, Aktivkohle, Ruß, Metallpulver.

Es können ferner auch Reaktionsverzögerer, z.B. sauer reagierende Stoffe wie Salzsäure, organische Säurehalogenide oder organische Säuren, ferner Flammschutzmittel der an sich bekannten Art, z.B. Trischlorethylphosphat oder Ammoniumphosphat und -polyphosphat, sowie Stabilisatoren gegen Alterungs- und Witterungseinflüsse wie phenolische Antioxidantien und Lichtschutzmittel, Weichmacher und fungistatisch und/oder bakteriostatisch wirkende Substanzen mitverwendet werden.

Beispiele sowie Einzelheiten über Verwendungs- und Wirkungsweise dieser Zusatzmittel sind im Kunststoff-Handbuch, Band VI, herausgegeben von Vieweg und Höchtlen, Carl-Hanser-Verlag, München 1966, z.B. auf den Seiten 103 bis 113 und in DE-A-2 854 384 und 2 920 501 beschrieben.

Je nach Viskosität der Ausgangskomponenten und je nach Art und Menge der zugesetzten Füllstoffe erhält man bei Raumtemperatur mehr oder weniger viskose PU-Reaktiv-Klebstoffmischungen. Diese Reaktiv-Klebstoffmischungen sind Suspensionen eines festen, durch Polyadduktumhüllung stabilisierten Polyisocyanats in der Polyol- und Polyamin-Komponente. Die Verfestigung dieser Mischungen erfolgt durch Hitzeeinwirkung. Die Verarbeitung der erfindungsgemäßen Systeme richtet sich nach deren Beschaffenheit und der technischen Aufgabenstellung. Sie können z.B. mit der Hand oder über eine geeignete Ausspreß- bzw Fördereinrichtung, z.B. über eine Kartusche oder eine Rakel auf die zu verklebenden Werkstoffe, z.B. Artikel aus blankem oder vorbeschichtetem Metall, Glas, glasierte Keramik, oder Kunststoffe, die auch z.B. mit Glasfasern verstärkt sein können, aufgebracht werden.

Die Mengenangaben in den Beispielen beziehen sich, sofern nicht anders angegeben, auf Gewichtsteile.

Beispiel 1

Die Unterschiede in den mechanischen Werten, die sich beim Ersatz eines reinen Polypropylenether-Diamins durch ein erfindungsgemäßes Propylenether-Diamin, welches statt auf Propylenglykol (ähnlich DE-A-3 403 499) auf 2,2-Bis-(4-hydroxyphenyl)-propan gestartet ist, ergeben sich aus der folgenden Zusammenstellung:

| | Aufdicktemp. | Härte nach 1/2 h Verfestigung bei 120° C Shore A | Shore D |
|---|---|---|---|
| Mischung A, bestehend aus 100 Gew.-Teilen eines Polyoxypropylenether-Diamins vom Molekulargewicht 1000 und 38,28 Gew.-Teilen über Uretdionbildung dimerisiertem 2,4-Dissocyanatotoluol | 110° C | 83 | 24 |
| Mischung B, bestehend aus 100 Gew.-Teilen eines auf 2,2-Bis-(4-hydroxyphenyl)-propan gestarteten Polyoxypropylenether-Diamins vom Molekulargewicht 1000 und 38,28 Gew.-Teilen über Uretdionbildung dimerisiertem 2,4-Diisocyanatotoluol | 90° C | 93 | 45 |

Beispiel 2

Mit einem hochtourigen Rührwerk werden in eine Mischung aus 63,75 Gew.-Teilen eines auf 2,2-Bis-(4-hydroxyphenyl)-propan gestarteten Polyoxypropylenether-Diamins vom Molekulargewicht 1000, 36,25 Gew.-Teilen eines auf Trimethylolpropan gestarteten Polyoxypropylenethertriols mit einem mittleren Molekulargewicht von 450, 0,1 Gew.-Teilen 4,4′-Diamino-3,3′-dimethyldicyclohexylmethan, 0,3 Gew.-Teilen Pb-Octoat "Octa Soligen Pb 24" der Firma Borchers und 0,2 Gew.-Teile einer 33 %igen Lösung von DABCO in Dipropylenglykol, 71 Gew.-Teilen Desmodur TT® sowie 10 Gew.-Teile Aersil R 202 gleichmäßig eingerührt und die Mischung anschließend durch Anlegen von Vakuum entgast. Man erhält eine leicht streichfähige Klebstoffpaste mit einer Aufdicktemperatur von 80° C. Beim Verfestigen bei 120° C erhält man einen leicht geschäumten, harten Körper. Die Klebstoffprüfung an SMC ergibt eine Zugscherfestigkeit von 10,0 N/mm².

Beispiel 3

Mit einem hochtourigen Rührwerk werden in eine Mischung aus 88,3 Gew.-Teilen eines auf 2,2-Bis-(4-hydroxyphenyl)-propan gestarteten Polyoxypropylenether-Diamins vom Molekulargewicht 1000, 11,7 Gew.-Teile eines auf Trimethylolpropan gestarteten Polyoxypropylenethertriols mit einem mittleren Molekulargewicht von 260 und 1,5 Gew.-Teile 4,4′-Diamino-3,3′-dimethyldicyclohexylmethan, 32,76 Gew.-Teile mit einer Strahlmühle fein zermahlenes Naphthylen-1,5-diisocyanat sowie 10 Gew.-Teile Aerosil R 202 gleichmäßig eingerührt und die Mischung anschließend durch Anlegen von Vakuum entgast. Man erhält eine leicht streichfähige Klebstoffpaste mit einer Aufdicktemperatur von 71° C. Nach Verfestigung bei 120° C mißt man eine Härte von 92 Shore A. Die Zugscherfestigkeit von 10 Min bei 120° C verklebten SMC-Probekörpern beträgt 7,0 N/mm².

**Ansprüche**

1. Reaktivklebstoffe auf Polyurethanbasis, enthaltend im wesentlichen jeweils wenigstens ein Polyisocyanat A, ein Polyol B und wenigstens ein Polyamin C, sowie gegebenenfalls übliche Zusatzstoffe, dadurch gekennzeichnet, daß das Polyamin C ein Polyetheramin mit wenigstens zwei Aminogruppen, wenigstens einem Phenylrest und wiederkehrenden Polyoxyalkyleneinheiten ist.

2. Reaktivklebstoffe nach Anspruch 1, dadurch gekennzeichnet, daß der Phenylrest des Polyamins erhältlich ist durch Abzug von zwei phenolischen OH-Gruppen aus 2,2-Bis-(4-hydroxyphenyl)-propan, 1,1-Bis-(4-hydroxyphenyl)-3,3,5-trimethylcyclohexan, 1,4-Bis-(2-hydroxyethoxy)-benzol.

3. Reaktivklebstoffe nach wenigstens einem der vorhergehenden Ansprüche, dadurch gekennzeichnet, daß das Polyetheramin C folgender allgemeinen Formel entspricht

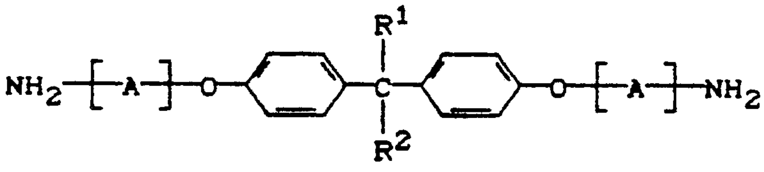

worin bedeuten

A mit O-Atomen unterbrochene, gegebenenfalls substituierte Kette aus gegebenenfalls unterschiedlichen Alkylenen A1

$R^1$, $R^2$: Alkylrest mit 1 bis 6 C-Atomen, insbesondere Methyl oder zusammen mit dem sie verbindenden C-Atomen der Rest zur Vervollständigung eines carbocyclischen Ringes.

4. Reaktivklebstoffe nach wenigstens einem der vorhergehenden Ansprüche, dadurch gekennzeichnet, daß das Polyetheramin folgender Formel entspricht

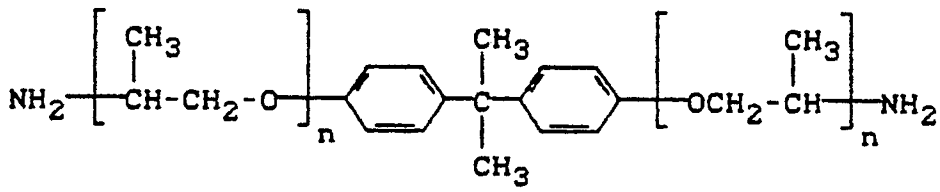

mit n = 1-50.

5. Reaktivklebstoffe nach wenigstens einem der vorhergehenden Ansprüche, dadurch gekennzeichnet, daß das Polyetheramin ein Molekulargewicht von 400 bis 6.000 aufweist.

6. Reaktivklebstoffe nach wenigstens einem der vorhergehenden Ansprüche, dadurch gekennzeichnet, daß das Polyisocyanat aus folgender Gruppe ausgewählt ist 1,5-Naphthalin-diisocyanat, dimeres 4,4'-Diisocyanatodiphenylmethan, dimeres 2,4-Diisocyanatotoluol, 3,3'-Diisocyanato-4,4'-dimethyl-N,N'-diphenylharnstoff und N,N'-Bis-[4-(4-oder 2-isocyanatophenylmethyl)-phenyl]-harnstoff. Besonders bevorzugt ist dimeres 2,4-Diisocyanatotoluol.

7. Reaktivklebstoffe nach wenigstens einem der vorhergehenden Ansprüche, dadurch gekennzeichnet, daß das Polyol B ein Molekulargewicht, von 400 bis 10.000 aufweist.

8. Reaktivklebstoffe nach wenigstens einem der vorhergehenden Ansprüche, dadurch gekennzeichnet, daß pro Mol A von 0,2 bis 1 Mol B und von 0,1 bis 1 Mol C enthalten sind.

9. Verwendung der Reaktivklebstoffe nach wenigstens einem der vorhergehenden Ansprüche für Einkomponentenklebstoffe.

10. Verfahren zum Verkleben von Substraten durch Reaktivklebstoffe, dadurch gekennzeichnet, daß wenigstens ein Reaktivklebstoff gemäß wenigstens einem der vorhergehenden Ansprüche verwendet wird.

Europäisches Patentamt

# EUROPÄISCHER RECHERCHENBERICHT

Nummer der Anmeldung

EP 90110542.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.5) |
|---|---|---|---|
| D,X | EP - A2 - 0 153 579 (BAYER AG) * Anspruch 1; Beispiele 1,21 * | 1-10 | C 09 J 175/12<br>C 09 J 171/10<br>C 08 G 18/50 |
| A | EP - A2 - 0 280 775 (ASHLAND OIL, INC.) * Ansprüche 1,2,5 * | 1,3,4,5,7 | |
| A | EP - A2 - 0 298 359 (UNION CARBIDE CORPORATION) * Ansprüche 1,4 * | 1,5 | |
| A | EP - A1 - 0 291 770 (TEXACO DEVELOPMENT) * Ansprüche 1-7 * | 1,5 | |
| A | US - A - 4 687 851 (LAUGHNER) * Ansprüche 1-10 * | 1,5 | |
| A | EP - A2 - 0 284 254 (IMPERIAL CHEMICAL INDUSTRIES) * Ansprüche 1,2,5-7,12,13 * | 1,5,6,7 | RECHERCHIERTE SACHGEBIETE (Int Cl.5) |
| D,A | DE - A1 - 2 854 384 (BAYER AG) * Anspruch 1 * | 1,5 | C 08 G 18/00<br>C 09 J 171/00<br>C 09 J 175/00 |

Der vorliegende Recherchenbericht wurde für alle Patentansprüche erstellt.

| Recherchenort | Abschlußdatum der Recherche | Prüfer |
|---|---|---|
| WIEN | 19-09-1990 | PUSTERER |

KATEGORIE DER GENANNTEN DOKUMENTEN
- X : von besonderer Bedeutung allein betrachtet
- Y : von besonderer Bedeutung in Verbindung mit einer anderen Veröffentlichung derselben Kategorie
- A : technologischer Hintergrund
- O : nichtschriftliche Offenbarung
- P : Zwischenliteratur
- T : der Erfindung zugrunde liegende Theorien oder Grundsätze
- E : älteres Patentdokument, das jedoch erst am oder nach dem Anmeldedatum veröffentlicht worden ist
- D : in der Anmeldung angeführtes Dokument
- L : aus andern Gründen angeführtes Dokument
- & : Mitglied der gleichen Patentfamilie, übereinstimmendes Dokument

EPA Form 1503 03 82